# EUROPEAN PATENT SPECIFICATION

(11) **EP 3 617 571 B1**
(45) Date of publication and mention of the grant of the patent: **03.08.2022**
(21) Application number: 19190443.2
(22) Date of filing: 07.08.2019
(51) Int. Cl.: F16K 31/06, F16K 31/08, F25B 40/00, F25B 41/37, F25B 41/385

(54) **HOME APPLIANCE USING A VALVE**
HAUSGERÄT MIT EINEM VENTIL
APPAREIL DOMESTIQUE UTILISANT UNE SOUPAPE

(30) Priority: 29.08.2018 TR 201812350
(43) Date of publication of application: 04.03.2020
(73) Proprietor: BSH Hausgeräte GmbH, 81739 München (DE)
(72) Inventor: Kilinc, Dogan, 34520 ISTANBUL (TR)

(56) References cited:
- EP-A1- 2 696 118
- DE-A1- 10 135 546
- FR-A1- 2 600 150
- GB-A- 2 044 412
- US-A- 3 828 818
- US-A1- 2003 159 454

## Description

### Field of Invention

The invention relates to a home appliance, for example a household refrigerator, having a valve, especially an electromagnetic valve.

### Prior Art

One of the example to such valves is disclosed in US2003159453 A. According to the publication, it is a bi-stable electromagnetic valve with a valve chamber arranged between two pole pieces and a valve body displaceable therein between two end positions, which is designed as a magnet armature for at least one permanent magnet and for at least one control coil, which is less susceptible to faults in comparison to known valves for refrigerant circuits.

FR 2 600 150 A1 describes a refrigerator comprising a cooling circuit that includes a first evaporator and a second evaporator, wherein a bi-stable electromagnetic valve is provided that includes an entry line connected to an output of a condenser, a first output line connected to the first evaporator, and a second output line connected to the second evaporator. The valve is configured to fluidly connect the input line to either the first or the second output line, so that only one of the condensers is supplied with cooling fluid.

The invention provides an additional improvement, an additional advantage or an alternative to the prior art.

### Purpose of the Invention

The purpose of the invention is obtaining a home appliance having a valve in a cost-effective manner.

To achieve the abovementioned purpose, the invention provides a home appliance in accordance with claim 1. The home appliance comprises an electromagnetic valve for a fluid flow comprising a valve chamber, an inflow line connected to valve chamber, a first outflow line connected to the valve chamber, at least one second outflow line connected to the valve chamber, a valve body displaceable in the valve chamber between more than one end positions; wherein at least one of the end positions corresponds to the at least one second outflow line to control flow of the fluid through the corresponding second outflow line; and that the first outflow line is always open to fluid outflow regardless of the position of the valve body. Thus, due to being an electromagnetic valve, it is achieved to have a valve in a cost-effective manner. It is also achieved that a valve selectively providing more than one outflow rates is obtained, particularly in a cost-effective manner. By using such a valve on a home appliance, a cost-effective home appliance is also obtained.

In this context, "cost-effective" is in particular to mean relatively cheaper than other types of valves that provides selective outflows known in the art, for example a rotary valve.

In a possible embodiment of the invention, the first outflow line may be fluidly connected to the valve chamber at a position except than the more than one end positions of the valve body. Thus, continues, in other terms uninterrupted, outflow through the first outflow line is realized regardless of the position of the valve body.

In a possible embodiment of the invention, the valve body may have one end position that corresponds none of the first outflow line, the at least one second outflow line and the inflow line. Thus, although an electromagnetic valve is employed, a three-way valve with only one selectively controlled outflow line is obtained.

According to an embodiment, the home appliance is a household cooling device, comprising the valve according to any one of the embodiment stated previously. Thus, a cost-effective and reliably working home appliance is obtained.

The household appliance is in particular provided for storing and preferably tempering victuals such as beverages, wine, meat, fish, vegetables, fruits, milk and/or dairy products in at least one operating state, advantageously for the purpose of enhancing a keepability of the stored victuals. However the home appliance could also be embodied as a home appliance for warming and in particular for cooking victuals such as an oven, a cooker and/or a microwave. Advantageously, the home appliance is embodied as a home chiller appliance, which is in at least one operating state configured for cooling victuals. The home chiller appliance could in particular be embodied as a climate cabinet, an ice-box, a refrigerator, a freezer, a refrigerator-freezer combination and/or a wine cooler. However, the home appliance could also be embodied as a home appliance for storing items without any cooling function.

The home appliance could in particular be embodied as a climate cabinet, an ice-box, a refrigerator, a freezer, a refrigerator-freezer combination and/or a wine cooler. However, the home appliance could also be embodied as a home appliance for storing items without any cooling function. The home appliance may have a storage space and may have at least one shelf in the storage space to accommodate items to be stored or to be processed in the home appliance.

The storage space is in particular defined by an inner liner of the home appliance. The storage space is in particular a space inside the home appliance, which is provided for storing victuals. The storage space is in particular at least partly divisible into at least two storage areas, preferably a plurality of storage areas. The storage space may be selectively closed by a door.

The walls of the storage space including the inner face of the door may be made of plastic, composite material, metal (stainless steel, aluminum etc.), painted metal (painted aluminum etc.) or any other material known in the art as a material used to form the chamber of a cooling device.

The door may be attached to the chamber as rotatable around a pivot or as slidable toward or away from the chamber. For instance, the door may be hinged to the chamber. In another embodiment, the door may be attached to the chamber by a rail as slidable. The rail may be a telescopic rail or any rail system known as used on a cooling device for such a door.

The shelf may be any platform allowing locating an item thereon. In an embodiment, the shelf may be a box type with a cover, or may be a container having an opening. Moreover, any shelf in the technical field known as door shelf or door bin having at least one wall may be used on the invention. The inner wall stated may be at least one of inner front wall, inner rear wall, inner bottom wall or inner top wall of the shelf.

The item disposed in the cooling device may be food or a container containing food.

According to the invention, the home appliance includes a cooling circuit with a refrigerant fluid, and the outflow lines are each connected to a corresponding outflow capillary tube. Thus, at least two outflow capillary including a continues-flow capillary is realized.

According to the invention, the capillary tubes are connected to a single inlet of a heat exchanger, particularly an evaporator, of the cooling circuit. Thus, the refrigerant fluid with selectively more than one flow rate may be provided to the inlet of the heat exchanger. Thus, according to the energy load and need of the heat exchanger, the refrigerant fluid with desired flow rate may be provided to the heat exchanger corresponding to the need. As a result, a cost-effective and efficient home appliance may be obtained.

In a possible embodiment of the invention, at least one of the capillary tubes may provide a different flow rate compared to at least one of the other capillary tubes. Thus, a further option to choose about the flow rate may be possible through the valve.

In a possible embodiment of the invention, the inflow line may be connected to a drier or an inflow capillary tube connected to the drier. Thus, according to the energy need and/or the design of the home appliance, connection between the drier and the valve may be realized. It is possible to connect the inflow line directly to the drier or a capillary tube connected to the drier.

Further advantages may become apparent from the following description of the drawing. In the drawing an exemplary embodiment of the invention is shown. The drawing, the description and the claims contain a plurality of features in combination.

### Brief Description of the Figures

Figure-1 represents the possible electromagnetic valve as cross-sectioned.
Figure-2 represents the possible home appliance that is a refrigerator.
Figure-3 represents the schematic view of the cooling circuit that employs the valve.

### Detailed Description of the Invention

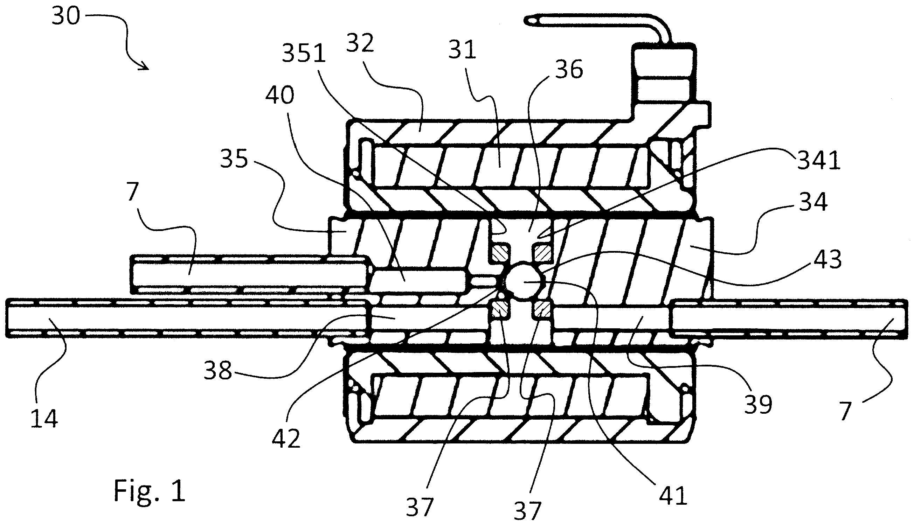

In Fig. 1, a valve (30), specifically an electromagnetic bi-stable valve is presented as sectioned. The valve (30) has a cylindrical outer shell that comprises a solenoid coil (31) and an inner sleeve (33) and an outer sleeve (32) encompassing the coil (31) together with the inner sleeve (33). The cylindrical outer shell is in pipe-form and has an inner space. In this space, a valve chamber (36) is formed by covering the both ends of the space by two end bodies (34, 35). The valve chamber (36) is formed by the clearance kept between two end bodies (34, 35). On the faces of the end bodies (34, 35) facing each other, there are two magnets (37) as one for each, namely the first end body (34) and the second end body (35). The magnets (37) has a circular form with a hole on the center. Inside the hole, the first and second end bodies (34, 35) form a seat (42) for a valve body (41) that is a magnetic ball, for example a steel ball. The valve body (41) can move between the seats (42) on the end bodies (34, 35) as end positions (43) for the valve body (41). According to current flow in the coil (31), one of the magnet (37) provides pulling force and pulls the valve body (41) towards itself. Thus, the valve body (41) is located on the corresponding seat (42). The holes of the magnets (37) and the seats (42) correspond to the central axis of the cylindrical end bodies (34, 35).

The valve (30) has one inflow line (38), one first outflow line (39) and a second outflow line (40). The inflow line (38) and the second outflow line (40) is formed through one of the second end body (35). The first outflow line (39) is formed through the first end body (34). The inflow line (38) is a channel between the valve chamber (36) and the outer face of the second end body (35). The end of the inflow line (38) opens into the valve chamber (36) at a point at least partially out of the area on the inner face (351) of the second end body (35) defined by the circular magnet (37). Thus, the valve body (41) never blocks the inflow line (38). Similarly, the first outflow line (39) is a channel between the valve chamber (36) and the outer face of the first end body (34). The end of the first outflow line (39) opens into the valve chamber (36) at a point at least partially out of the area on the inner face (341) of the first end body (34) defined by the circular magnet (37). Thus, the valve body (41) never blocks the first outflow line (39). On the other hand, the second outflow line (40) extends along the central axis of the second end body (35) and opens into the valve chamber (36) through the seat (42) on the second end body (35). Therefore, the second outflow line (40) can be controlled by moving the valve body (41) on or away from the seat (42).

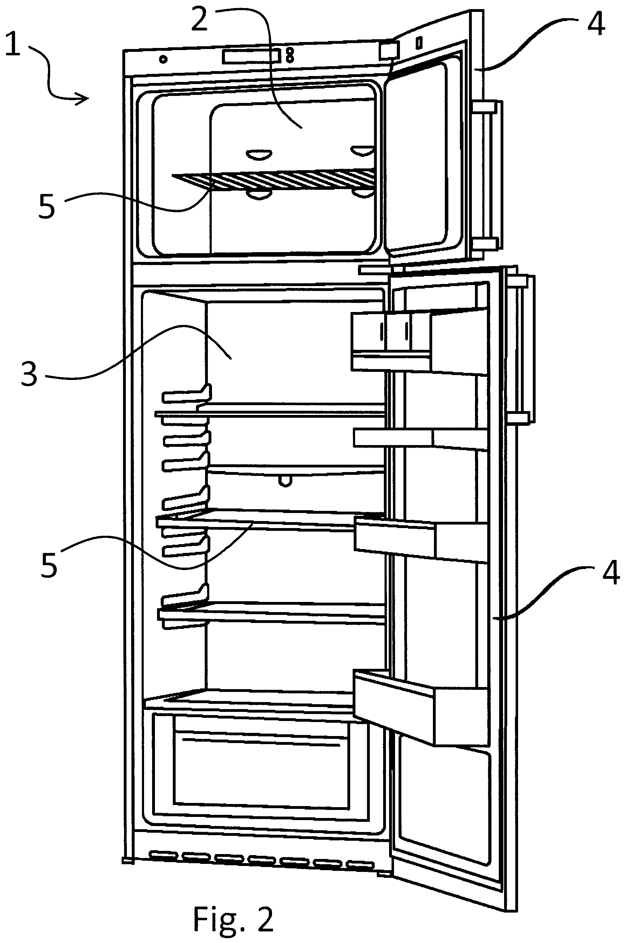

In fig. 2, a domestic refrigerator is presented as a home appliance (1) that has a freezer section (2) and a fridge section (3) covered by hinged doors (4) and having shelves (5) to support items. It has a cooling circuit (6) to cool the items in the refrigerator.

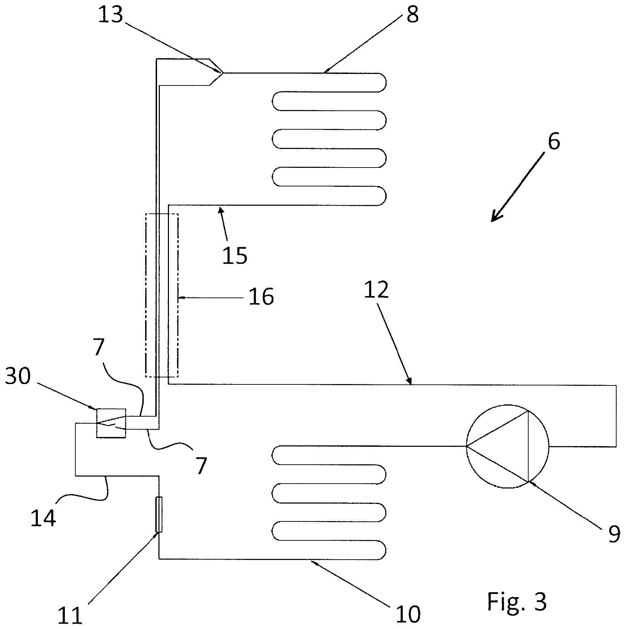

The cooling circuit (6), as exemplified in fig. 3, has an evaporator (8) to take the heat inside the refrigerator, a compressor (9), a condenser (10), a drier (11), a valve (30) and fluid pipe (12). A refrigerant fluid flows through the cooling circuit (6), through pipe (12) and the other circuit members mentioned. The inflow line (38) of the valve (30) is connected to the drier (11) by an inflow capillary tube (14). The first and second outflow lines (39, 40) of the valve (30) are connected to an outflow capillary tube (7) corresponding to each one. Therefore, there are two parallel outflow capillary tubes (7). These outflow capillary tubes (7) are connected to a single inlet (13) of the evaporator (8). The fluid pipe (12) coming from the outlet (15) of the evaporator (8) is passed close to the outflow capillary tubes (7) to form an intermediate heat exchanger (16).

### Reference Signs

- **1.**: Home appliance
- **2.**: Freezer section
- **3.**: Fridge section
- **4.**: Door
- **5.**: Shelve
- **6.**: Cooling circuit
- **7.**: Outflow capillary tube
- **8.**: Evaporator
- **9.**: Compressor
- **10.**: Condenser
- **11.**: Drier
- **12.**: Fluid pipe
- **13.**: Inlet
- **14.**: Inflow capillary tube
- **15.**: Outlet
- **16.**: Intermediate heat exchanger

- **30.**: Valve
- **31.**: Coil
- **32.**: Outer sleeve
- **33.**: Inner sleeve
- **34.**: First end body
- **341.**: Inner face
- **35.**: Second end body
- **351.**: Inner face
- **36.**: Valve chamber
- **37.**: Magnet
- **38.**: Inflow line
- **39.**: First outflow line
- **40.**: Second outflow line
- **41.**: Valve body
- **42.**: Seat
- **43.**: End position

## Claims

1. A home appliance (1), comprising:
an electromagnetic valve (30) for a fluid flow comprising a valve chamber (36), an inflow line (38) connected to the valve chamber (36), a first outflow line (39) connected to the valve chamber (36), at least one second outflow line (40) connected to the valve chamber (36),
and a valve body (41) displaceable in the valve chamber (36) between more than one end positions (43), wherein at least one of the end positions (43) corresponds to the second outflow line (40) to control flow of the fluid through the corresponding second outflow line (40), and wherein the first outflow line (39) is always open to fluid outflow regardless of the position of the valve body (41);
a cooling circuit (6) with a refrigerant fluid, wherein the outflow lines (39, 40) are each connected to a corresponding outflow capillary tube (7), and wherein the capillary tubes (7) are connected to a single inlet (13) of a heat exchanger of the cooling circuit (6).

2. The home appliance (1) according to claim 1, wherein the valve (30) includes:
a cylindrical outer shell that comprises a solenoid coil (31), wherein the cylindrical outer shell is in pipe-form and has an inner space,
an inner sleeve (33),
an outer sleeve (32) encompassing the coil (31) together with the inner sleeve (33), first and second cylindrical end bodies (34, 35) covering both ends of the inner space of the outer shell to form a valve chamber (36) by a clearance kept between the two end bodies (34, 35),
two magnets (37), wherein one magnet (37) is provided on a face of the first end body (34) and one magnet is provided on a face of the second end body (35), the faces of the end bodies (34, 35) facing each other, wherein the magnets (37) have a circular form with a hole on the center arranged corresponding to a central axis of the end bodies (34, 35), wherein inside the hole, the first and second end bodies (34, 35) form a seat (42) for the valve body (41) being a magnetic ball, and wherein the valve body (41) is configured to move between the seats (42) on the end bodies (34, 35) as end positions (43) for the valve body (41), when one of the magnet (37) provides pulling force and pulls the valve body (41) towards itself due to current flow in the coil (31), so that the valve body (41) is located on the corresponding seat (42),
wherein the inflow line (38) and the second outflow line (40) are formed through the second end body (35),
wherein the first outflow line (39) is formed through the first end body (34),
wherein the inflow line (38) is a channel between the valve chamber (36) and an outer face of the second end body (35), the end of the inflow line (38) opening into the valve chamber (36) at a point at least partially out of the area on the inner face (351) of the second end body (35) defined by the circular magnet (37), so that the valve body (41) never blocks the inflow line (38),
wherein the first outflow line (39) is a channel between the valve chamber (36) and an outer face of the first end body (34), the end of the first outflow line (39) opening into the valve chamber (36) at a point at least partially out of the area on the inner face (341) of the first end body (34) defined by the circular magnet (37), so that the valve body (41) never blocks the first outflow line (39), and
wherein the second outflow line (40) extends along the central axis of the second end body (35) and opens into the valve chamber (36) through the seat (42) on the second end body (35), so that the second outflow line (40) can be controlled by moving the valve body (41) on or away from the seat (42).

3. The home appliance (1) according to anyone of the preceding claims, wherein the valve body (41) has one end position (43) that corresponds none of the first outflow line (39), the at least one second outflow line (40) and the inflow line (38).

4. The home appliance (1) according to anyone of the preceding claims, wherein the home appliance is a household cooling device.

5. The home appliance (1) according to anyone of the preceding claims, wherein the heat exchanger is an evaporator (8).

6. The home appliance (1) according to anyone of the preceding claims, wherein at least one of the capillary tubes (7) provides a different flow rate compared to at least one of the other capillary tubes (7).

7. The home appliance (1) according to anyone of the preceding claims, wherein the inflow line (38) is connected to a drier (11) or an inflow capillary tube (14) connected to the drier (11).

## Patentansprüche

1. Haushaltsgerät (1), das Folgendes umfasst:
ein elektromagnetisches Ventil (30) für einen Fluidstrom mit einer Ventilkammer (36), einer an die Ventilkammer (36) angeschlossenen Zuflussleitung (38), einer an die Ventilkammer (36) angeschlossenen ersten Abflussleitung (39), mindestens einer an die Ventilkammer (36) angeschlossenen zweiten Abflussleitung (40) und einem Ventilkörper (41), der in der Ventilkammer (36) zwischen mehr als einer Endposition (43) verschiebbar ist, wobei mindestens eine der Endpositionen (43) der zweiten Abflussleitung (40) zum Regeln des Fluidstroms durch die entsprechende zweite Abflussleitung (40) entspricht und die erste Abflussleitung (39) unabhängig von der Position des Ventilkörpers (41) für Fluidabfluss stets offen ist,
einen Kühlkreislauf (6) mit einem Kühlfluid, wobei die Abflussleitungen (39, 40) jeweils an ein entsprechendes Abflusskapillarrohr (7) angeschlossen sind und die Kapillarrohre (7) an einen einzelnen Einlass (13) eines Wärmetauschers des Kühlkreislaufs (6) angeschlossen sind.

2. Haushaltsgerät (1) nach Anspruch 1, wobei das Ventil (30) Folgendes aufweist:
eine zylinderförmige Außenhülse, die eine Magnetspule (31) umfasst, wobei die zylinderförmige Außenhülse in Rohrform vorliegt und einen Innenraum aufweist, eine Innenhülse (33),
eine Außenhülse (32), die zusammen mit der Innenhülse (33) die Spule (31) umgibt, einen ersten und einen zweiten zylinderförmigen Endkörper (34, 35), die beide Enden des Innenraums der Außenhülse so abdecken, dass eine Ventilkammer (36) gebildet wird, indem zwischen den beiden Endkörpern (34, 35) ein Zwischenraum bleibt, zwei Magnete (37), wobei ein Magnet (37) an einer Fläche des ersten Endkörpers (34) und ein Magnet an einer Fläche des zweiten Endkörpers (35) vorgesehen ist, wobei die Flächen der Endkörper (34, 35) einander zugewandt sind, wobei die Magnete (37) eine runde Form mit einem Loch in der Mitte aufweisen, das einer Mittelachse der Endkörper (34, 35) entsprechend angeordnet ist, wobei der erste und der zweite Endkörper (34, 35) in dem Loch einen Sitz (42) für den Ventilkörper (41) bilden, bei dem es sich um eine Magnetkugel handelt, und der Ventilkörper (41) so konfiguriert ist, dass er sich zwischen den Sitzen (42) an den Endkörpern (34, 35) als Endpositionen (43) für den Ventilkörper (41) bewegen kann, wenn einer der Magnete (37) aufgrund eines Stromflusses in der Spule (31) für eine Zugkraft sorgt und den Ventilkörper (41) zu sich hin zieht, so dass sich der Ventilkörper (41) in dem entsprechenden Sitz (42) befindet,
wobei die Zuflussleitung (38) und die zweite Abflussleitung (40) durch den zweiten Endkörper (35) hindurch ausgebildet sind,
wobei die erste Abflussleitung (39) durch den ersten Endkörper (34) hindurch ausgebildet ist,
wobei es sich bei der Zuflussleitung (38) um einen Kanal zwischen der Ventilkammer (36) und einer Außenfläche des zweiten Endkörpers (35) handelt, wobei das Ende der Zuflussleitung (38) an einer Stelle in die Ventilkammer (36) mündet, die zumindest teilweise außerhalb des Bereichs an der Innenfläche (351) des zweiten Endkörpers (35) liegt, welche von dem runden Magneten (37) definiert wird, so dass der Ventilkörper (41) die Zuflussleitung (38) niemals blockiert,
wobei es sich bei der ersten Abflussleitung (39) um einen Kanal zwischen der Ventilkammer (36) und einer Außenfläche des ersten Endkörpers (34) handelt, wobei das Ende der ersten Abflussleitung (39) an einer Stelle in die Ventilkammer (36) mündet, die zumindest teilweise außerhalb des Bereichs an der Innenfläche (341) des ersten Endkörpers (34) liegt, welche von dem runden Magneten (37) definiert wird, so dass der Ventilkörper (41) die erste Abflussleitung (39) niemals blockiert, und wobei die zweite Abflussleitung (40) an der Mittelachse des zweiten Endkörpers (35) entlang verläuft und durch den Sitz (42) an dem zweiten Endkörper (35) hindurch in die Ventilkammer (36) mündet, so dass die zweite Abflussleitung (40) durch Bewegen des Ventilkörpers (41) auf den oder weg von dem Sitz (42) geregelt werden kann.

3. Haushaltsgerät (1) nach einem der vorhergehenden Ansprüche, wobei der Ventilkörper (41) eine Endposition (43) aufweist, die weder der ersten Abflussleitung (39) noch der mindestens einen zweiten Abflussleitung (40) oder der Zuflussleitung (38) entspricht.

4. Haushaltsgerät (1) nach einem der vorhergehenden Ansprüche, wobei es sich bei dem Haushaltsgerät um eine Haushaltskühlvorrichtung handelt.

5. Haushaltsgerät (1) nach einem der vorhergehenden Ansprüche, wobei es sich bei dem Wärmetauscher um einen Verdampfer (8) handelt.

6. Haushaltsgerät (1) nach einem der vorhergehenden Ansprüche, wobei mindestens eines der Kapillarrohre (7) im Vergleich zu mindestens einem der anderen Kapillarrohre (7) für eine andere Durchflussrate sorgt.

7. Haushaltsgerät (1) nach einem der vorhergehenden Ansprüche, wobei die Zuflussleitung (38) an einen Trockner (11) oder ein an den Trockner (11) angeschlossenes Zuflusskapillarrohr (14) angeschlossen ist.

## Revendications

1. Appareil domestique (1), comprenant :
une soupape électromagnétique (30) pour un écoulement de fluide comprenant une chambre de soupape (36), une conduite d'entrée (38) raccordée à la chambre de soupape (36), une première conduite de sortie (39) raccordée à la chambre de soupape (36), au moins une deuxième conduite de sortie (40) raccordée à la chambre de soupape (36), et un corps de soupape (41) déplaçable dans la chambre de soupape (36) entre plus d'une position finale (43), dans lequel au moins une des positions finales (43) correspond à la deuxième conduite de sortie (40) pour commander l'écoulement du fluide à travers la deuxième conduite de sortie correspondante (40), et dans lequel la première conduite de sortie (39) est toujours ouverte à la sortie de fluide quelle que soit la position du corps de soupape (41) ;
un circuit de refroidissement(6) avec un fluide frigorigène, dans lequel les conduites de sortie (39, 40) sont raccordées chacune à un tube capillaire (7) de sortie correspondant, et dans lequel les tubes capillaires (7) sont raccordés à une seule admission (13) d'un échangeur de chaleur du circuit de refroidissement (6).

2. Appareil domestique (1) selon la revendication 1, dans lequel la soupape (30) comprend :
une enveloppe externe cylindrique qui comprend une bobine solénoïde (31), dans lequel l'enveloppe externe cylindrique est en forme de tube et a un espace interne,
un manchon interne (33),
un manchon externe (32) renfermant la bobine (31) conjointement avec le manchon interne (33),
des premier et deuxième corps d'extrémité cylindriques (34, 35) couvrant les deux extrémités de l'espace interne de l'enveloppe externe pour former une chambre de soupape (36) par un espacement maintenu entre les deux corps d'extrémité (34, 35),
deux aimants (37), un aimant (37) étant prévu sur une face du premier corps d'extrémité (34) et un aimant étant prévu sur une face du deuxième corps d'extrémité (35), les faces des corps d'extrémité (34, 35) se faisant mutuellement face, dans lequel les aimants (37) ont une forme circulaire avec un trou sur le centre agencé en correspondant à un axe central des corps d'extrémité (34, 35), dans lequel à l'intérieur du trou, les premier et deuxième corps d'extrémité (34, 35) forment un siège (42) pour le corps de soupape (41) qui est une balle magnétique, et dans lequel le corps de soupape (41) est configuré pour se déplacer entre les sièges (42) sur les corps d'extrémité (34, 35) comme positions finales (43) du corps de soupape (41), lorsque l'un des aimants (37) fournit une force de traction et tire le corps de soupape (41) vers lui-même du fait de l'écoulement actuel dans la bobine (31), de sorte que le corps de soupape (41) est situé sur le siège correspondant (42),
dans lequel la conduite d'entrée (38) et la deuxième conduite de sortie (40) sont formées à travers le deuxième corps d'extrémité (35),
dans lequel la première conduite de sortie (39) est formée à travers le premier corps d'extrémité (34),
dans lequel la conduite d'entrée (38) est un canal entre la chambre de soupape (36) et une face externe du deuxième corps d'extrémité (35), l'extrémité de la conduite d'entrée (38) ouvrant dans la chambre de soupape (36) à un point au moins partiellement à l'extérieur de la zone sur la face interne (351) du deuxième corps d'extrémité (35) défini par l'aimant circulaire (37), de sorte que le corps de soupape (41) ne bloque jamais la conduite d'entrée (38),
dans lequel la première conduite de sortie (39) est un canal entre la chambre de soupape (36) et une face externe du premier corps d'extrémité (34), l'extrémité de la première conduite de sortie (39) ouvrant dans la chambre de soupape (36) à un point au moins partiellement à l'extérieur de la zone sur la face interne (341) du premier corps d'extrémité (34) défini par l'aimant circulaire (37), de sorte que le corps de soupape (41) ne bloque jamais la première conduite de sortie (39), et
dans lequel la deuxième conduite de sortie (40) s'étend le long de l'axe central du deuxième corps d'extrémité (35) et ouvre dans la chambre de soupape (36) à travers le siège (42) sur le deuxième corps d'extrémité (35), de sorte que la deuxième conduite de sortie (40) peut être commandée en déplaçant le corps de soupape (41) sur ou à distance du siège (42).

3. Appareil domestique (1) selon l'une quelconque des revendications précédentes, dans lequel le corps de soupape (41) a une position finale (43) qui ne correspond à aucune de la première conduite de sortie (39), de la au moins une deuxième conduite de sortie (40) et de la conduite d'entrée (38).

4. Appareil domestique (1) selon l'une quelconque des revendications précédentes, dans lequel l'appareil domestique est un dispositif de refroidissement ménager.

5. Appareil domestique (1) selon l'une quelconque des revendications précédentes, dans lequel l'échangeur de chaleur est un évaporateur (8).

6. Appareil domestique (1) selon l'une quelconque des revendications précédentes, dans lequel au moins un des tubes capillaires (7) fournit un débit différent comparé à au moins un des autres tubes capillaires (7).

7. Appareil domestique (1) selon l'une quelconque des revendications précédentes, dans lequel la conduite d'entrée (38) est raccordée à un sécheur (11) ou à un tube capillaire d'entrée (14) raccordé au sécheur (11).
